# EUROPEAN PATENT SPECIFICATION

(11) **EP 2 735 282 B1**
(45) Date of publication and mention of the grant of the patent: **11.10.2017**
(21) Application number: 13194669.1
(22) Date of filing: 27.11.2013
(51) Int. Cl.: A61C 17/34

(54) **A brush head for an electric toothbrush**
Bürstenkopf für eine elektrische Zahnbürste
Tête de brosse pour une brosse à dents électrique

(30) Priority: 27.11.2012 HK 12112151
(43) Date of publication of application: 28.05.2014
(73) Proprietor: Techtronic Floor Care Technology Limited, Tortola (VG)
(72) Inventor: Chan, Wai Tong, Tsing Yi (HK); Mok, Kwok Ting, Tokwawan, Kowloon (HK)
(74) Representative: Stevenson-Hill, Jack Patrick

(56) References cited:
- DE-A1- 4 243 220
- DE-U1- 9 310 480
- US-A- 5 070 567
- US-A- 5 099 536
- US-A- 5 640 735
- US-A1- 2006 174 431

## Description

### Field of Invention

The present invention relates to a toothbrush, in particular, an electric toothbrush.

### Background of the Invention

Electric toothbrushes are well known. Similar to manual toothbrushes, an electric toothbrush typically includes a handle attached to a brush head. The brush head usually consists of one or more tufts of bristles which are used to clean the teeth and gums. Electric toothbrushes use electric power supplied usually by a battery to move the brush head rapidly, rotating and/or oscillating the bristle tufts to clean plaque and tarter build up on the teeth and gums. Due to the geometry and alignment of teeth, there are often areas in the mouth that are difficult to access and therefore difficult to clean.

Typically, the usual cleaning technique is to simply move the electric toothbrush slowly from tooth to tooth, allowing the rotating/oscillating brushes to do most of the work. Since, tooth orientation varies from user to user, it is desirable to improve the effectiveness of the electric toothbrush to maximise cleaning.

DE9310480U1 discloses an electromechanical toothbrush with a drive unit enclosed in a handle, consisting of a power source or store and an electric motor connected via a drive system to a drive spindle projecting from the end of the handle in such a way that the drive spindle is circularly oscillated by the electric motor. Provision is made for toothbrush attachments (8) with a shaft and a brush head (13) secured thereto with brush plates (30) arranged on an oscillating brush plate (16) rotatably fitted therein, in which the shaft can be fitted integrally in rotation on an attachment (12) arranged concentrically to the drive spindle (2) of the handle (1) and a pin rotatably fitted in the hollow shaft can be fitted integrally in rotation on the drive spindle (3) of the handle (1) and in the brush head (30) there is a plurality of rotatably fitted brush plates (30) with brush-heads (35) arranged thereon at a distance from their axis of rotation which can be operated by a planet gear (20, 34).

DE4243220A1 discloses a toothbrush having inserts which have a shaft and a brush head (13) fixed on it. Bristle tufts are driven oscillating on a brush disc (17) located rotationally. The shaft is fitted rotation proof on an attachment (12), arranged concentric to the drive spindle (2) of the handle (1). A plug-on shaft (18) rotationally located in the hollow shaft, is pluggable rotation proof on the driven spindle (3) of the handle (1). A number of rotationally located bristle tufts (30, 31) is provided, which are driven by a planetary gearing.

US5099536A discloses an electric toothbrush, wherein a head case is detachable from a main case, so that brushes on the head case can be easily washed and kept clean. The orientation of the brushes with respect to the main case can be changed, so that every tooth can be brushed well. A driving force of a motor is transmitted by first and second shafts and gears, so that the force can be positively transmitted to the brush even through the transmitting route is bent. Vibration of the electric toothbrush is less than conventional toothbrushes which alternately rotate brushes because the brushes are rotated by the first and second shafts. Holes of lead-pieces for connecting terminals have inwardly extending claws, and the terminals can be connected only by insertion into the holes, so that assembling steps can be reduced. If the tips of the claws are sharpened, the terminals are held tightly.

US5640735A discloses a power driven dental toothbrush mechanism that is provided having a suitable power source such as a water turbine motor or an electric motor operating through a drive shaft and gear train assembly to accomplish controlled rotation of a plurality of gear driven bristle tufts. A brush head assembly is releasably connected to a motor housing structure and defines an internal gear chamber within which is located a plurality of bristle tuft gears and drive gears therefor. The toothbrush mechanism incorporates a flushing water supply passage in communication with a water inlet source and which transitions the joint between the brush head and housing structure and opens into the internal gear chamber. The brush head and housing structure also define a flushing water exhaust passage in communication with the internal gear chamber of the brush head opposite the flushing water inlet. The flushing water exhaust passage extends through the brush head and a portion of the housing structure and terminates at an exhaust port that is located on the housing structure in a position that is easily engaged by a finger of the user. The brush head is provided with a water outlet valve which is preferably a normally closed, pressure responsive valve that is opened when water pressure within the internal gear chamber is increased to a predetermined value by user placement of a finger over the flushing water outlet port.

US5070567A discloses a toothbrush which includes a brush head having a first group of bristle holders arranged along a substantially straight line and a second group of bristle holders arranged in a circle, all the bristle holders being rotatable about their respective axes.

### Summary of the Invention

The invention is as defined in the appended claims.

One embodiment of the present invention provides a brush head for an electric toothbrush. The brush head includes a housing and a plurality of bristle tufts extending through one or more apertures in the housing. The brush head includes a gear train within the housing. The gear train includes a drive gear configured to oscillate about an axis, and a plurality of first driven gears wherein each first driven gear is meshed directly with the drive gear. The brush head includes drive means configured to provide motion to the gear train. The drive gear provides a first drive output including a first oscillating motion in a first direction, and the driven gears each provide a second drive output including a second oscillating motion in a second direction which is opposite to the first direction.

Preferably, the plurality of first driven gears includes two first driven gears disposed around a first quadrant of the drive gear.

Preferably, the plurality of first driven gears further includes two first driven gears disposed around a second quadrant opposite the first quadrant of the drive gear.

Preferably, the gear ratio between the drive gear and each first driven gear is 4.

Preferably, the gear train includes a plurality of second driven gears meshed with one or more first driven gears.

Preferably, the plurality of bristle tufts includes a first set of bristle tufts attached to the drive gear and a second set of bristle tufts attached to each driven gear.

Preferably, the first set of bristle tufts are shorter than the second set of bristle tufts and wherein the first set of bristle tufts includes bristle tufts having a flat tip and each second set of bristle tuft includes bristle tufts having a tapered tip.

Another embodiment of the present invention provides a brush for an electric toothbrush wherein the brush head includes a housing and a plurality of bristle tufts extending through one or more apertures in the housing. The brush head includes an epicyclic gear set within the housing. The gear set includes a ring gear and plurality of planet gears supported on a planet carrier. Each planet gear is meshed with the ring gear. The brush head includes drive means configured to provide motion to the epicyclic gear set. A first drive output includes a first oscillating motion about a first axis, and a second drive output including an orbiting motion about the first axis and a second oscillating motion.

Preferably, the drive means includes a drive shaft having a first end connected to a motor and a second end connected to the planet carrier so that in use the planet carrier is driven by the drive shaft.

Preferably, the plurality of bristle tufts includes a first set of bristle tufts attached to the planet carrier and a second set of bristle tufts attached to each planet gear.

Preferably, the brush head further includes a sun gear, and each planet gear is meshed between the sun gear and the ring gear.

Preferably, the ring gear is fixed and the sun gear and the planet carrier oscillate about the first axis causing the planet gears to orbit about the first axis and oscillate about their own respective axes.

Preferably, the gear ratio between the ring gear and the planet gear is 5, and the gear ratio between the sun gear and the planet gears is 3.

Preferably, the plurality of bristle tufts includes a first set of bristle tufts attached to the sun gear and a second set of bristle tufts attached to each planet gear.

### Brief Description of the Drawings

Preferred forms of the invention will now be described by way of example with reference to the accompany drawings.
Figure 1 is a perspective view of a brush head according to one embodiment of the present invention;
Figure 1A is a partial perspective view of the brush head of Figure 1;
Figure 2 is a partial view of the brush head of Figure 1 in use;
Figure 3 is a partial view of a brush head according to another embodiment of the present invention;
Figure 4 is a partial view of the brush head of Figure 1 showing the gear train;
Figure 5 is a partial view of the brush head of Figure 3 showing the gear train;
Figures 6 to 9 are partial view of a brush head according to further embodiments;
Figure 10 shows corresponding bristle tufts to Figures 4 to 9 respectively;
Figure 11 is a partial perspective view of a brush head according to another embodiment of the present invention;
Figure 12 is a partial view of the brush head of Figure 11 showing the gear arrangement;
Figure 13 is a partial view of the brush head of Figure 11;
Figure 14 is a partial view of the brush head according to another embodiment of the present invention; and
Figure 15 is a partial view of the brush head of Figure 11 showing the gear arrangement.

### Details Description of a Preferred Embodiment

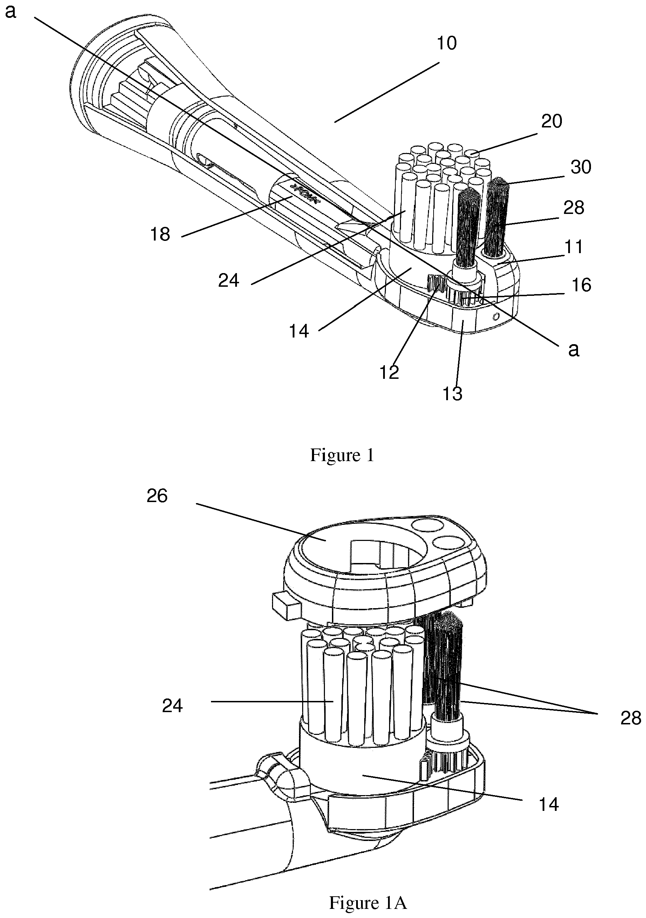

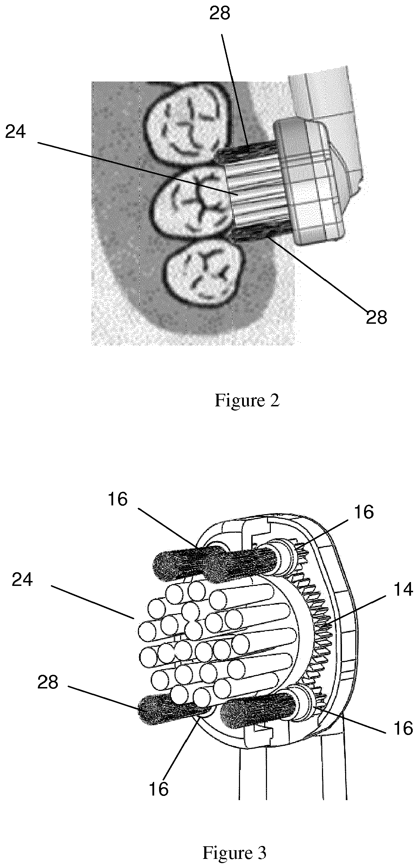

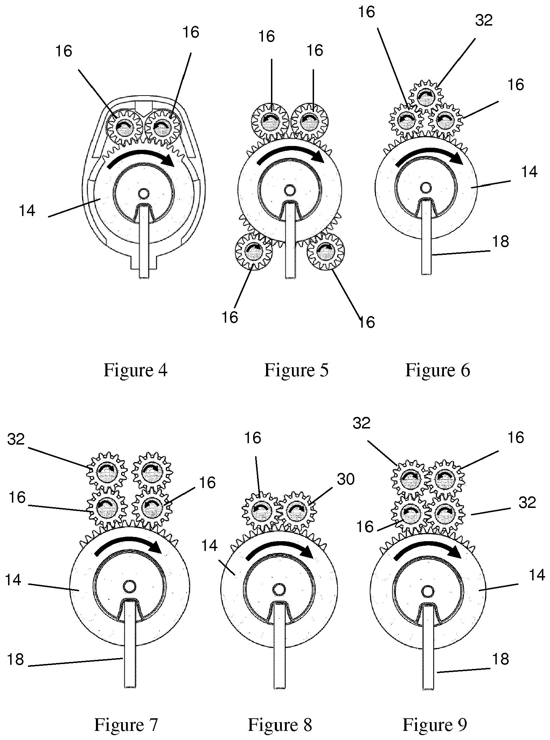

Referring to Figure 1, a brush head 10 for an electric toothbrush (not shown) is shown. It will be understood that the brush head may be removably connectable to a body or handle of the electric toothbrush wherein the body or handle includes a motor and means to power the motor. The brush head 10 includes a housing 11 enclosing a gear train 12. The housing 11 may be made from suitable water impermeable material, such as polypropylene, acrylonitrile butadiene styrene (ABS) or other suitable thermoplastic. The gear train 12 includes a drive gear 14 and a plurality of primary driven gears 16. The present embodiment shows two primary driven gears 16; however, it will be appreciated that more primary driven gears may also be suitable. For example, Figures 3 and 5 illustrate a drive gear 14 and four primary driven gears 16. Each primary driven gear 16 is configured to mesh directly with the drive gear 14. A drive shaft 18 imparts motion from the motor to the drive gear 14. The drive shaft 18 includes a first end (not shown) connectable to the motor and a second end 22 connectable to the gear train 12 and configured to provide oscillatory motion to the gear train 12. As will be understood, when the drive gear 14 moves in a clockwise direction, the primary driven gears 16 move in a counter clockwise direction. Similarly when the drive gear 14 moves in a counter clockwise direction the primary driven gears 16 move in a clockwise direction.

As best shown in Figure 1A the drive gear 14 includes a plurality of first bristle tufts 24 attached to the drive gear 14 and extending upwardly through apertures 26 in the housing. A plurality of second bristle tufts 28 is attached to each respective primary driven gear 16. In the present embodiment the first bristle tufts 24 are shorter than the second bristle tufts 28. Each first bristle tuft 24 includes a flat surface 20 suitable for cleaning the surface of a tooth. The longer, second bristle tufts 28 include a tapered tip 30 which is suitable for cleaning between teeth and along the gum line. As best shown in Figure 2, the configuration of the bristle tufts 24, 28 allows the shorter, first bristle tufts 24 to engage the surface of a tooth while the longer, second bristle tufts 28 reach between adjacent teeth. The simultaneous oscillation and counter oscillation of the bristle tufts 24, 28 act to thoroughly clean the tooth.

The preferred gear ratio between the drive gear 14 and the driven gears 16 is 4. However, other gear ratios ranging from 1 to 6 may be suitable.

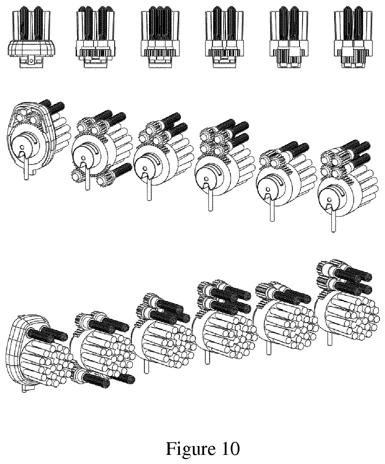

In other embodiments the gear train 12 may include one or more secondary driven gears 32. Each secondary driven gear 32 meshes directly with one or more primary driven gears 16. Figures 4 - 10 illustrate possible gear configurations. It will be understood that increasing the number of primary driven gears 16 and secondary driven gears 32 results in increased oscillation and counter oscillation thus providing more effective cleaning.

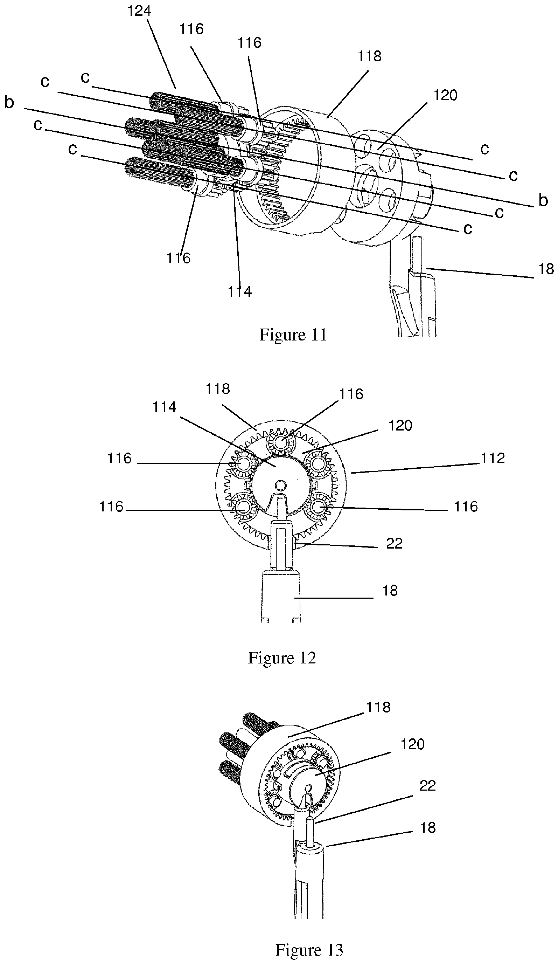

Figures 11-13 illustrate another embodiment of a brush head according to the present invention. As explained above, the brush head 10 may be removably connectable to a body or handle of an electric toothbrush. In this embodiment the brush head 10 includes a gear train 112 in the form of an epicyclic gear set. The epicyclic gear set 112 includes a sun gear 114, a plurality of planet gears 116 and a fixed ring gear 118. In the present embodiment there are five planet gears 116. Preferably, the gear ratio between the ring gear 118 and the planetary gears 116 is 5, and the gear ratio between the sun gear 114 and the planetary gears is 3. It will be appreciated that the number of planet gears 116 and the gear ratios may be varied to accommodate the size of the brush head 10. The planet gears 16 are supported by a planet carrier 120. A drive shaft 18 which is driven by a motor (not shown) includes an eccentric end 22 to provide oscillatory motion to the carrier 120. The fixed ring gear 118 is configured to mesh with the planet gears 116 so that when the planet carrier 118 oscillates, the planet gears 116 orbit around the planet carrier axis b-b and oscillate around their respective axes c-c in a direction counter to the direction of the planet carrier 120. The sun gear 114 is driven by the planet gears 116 and oscillates around its respective axis b-b in a direction counter to the direction of the planet gears 116.

As best shown in Figure 11 the sun gear and each planet gear 116 include a bristle tuft 124. It will be understood that the bristle tufts of the planet gears may be the same as, softer or harder than the bristle tufts on the sun gear. The oscillation and counter oscillation of the bristle tufts 124 provide more effective cleaning.

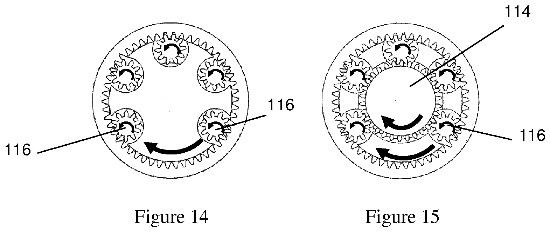

Alternatively, as shown in Figures 14, the planet carrier 120 may be directly driven by the drive shaft 18. Bristle tufts 124 are attached to the planet carrier 120 and to each planet gear 116. This configuration provides a first drive output including the planet carrier oscillating a first axis, and a second drive output including each planet gear orbiting about the first axis and oscillating about its respective axis.

Although the invention has been described with references to specific examples, persons skilled in the art will appreciate that the invention can be embodied in other forms without departing from the scope as defined by the claims.

## Claims

1. A brush head (10) for an electric toothbrush, the brush head (10) including:
a housing (11);
a plurality of bristle tufts (24, 28, 124) extending through one or more apertures (26) in the housing (11);
a gear train (12) within the housing (11), the gear train (12) including a drive gear (14) configured to oscillate about an axis, and a plurality of first driven gears (16), each first driven gear (16) meshed directly with the drive gear (14);
drive means configured to provide motion to the gear train (12);
the drive gear (14) providing a first drive output including a first oscillating motion in a first direction; and
the driven gears (16) each providing a second drive output including a second oscillating motion in a second direction which is opposite to the first direction, wherein the plurality of bristle tufts (24, 28) includes a first set of bristle tufts (24) attached to the drive gear (14) and a second set of bristle tufts (28) attached to the plurality of first driven gears (16).

2. The brush head (10) according to claim 1, wherein the plurality of first driven gears (16) includes two first driven gears (16) disposed around a first quadrant of the drive gear (14).

3. The brush head (10) according to claim 2, wherein the plurality of first driven gears (16) further includes two first driven gears (16) disposed around a second quadrant opposite the first quadrant of the drive gear (14).

4. The brush head (10) according to any one of claims 1 to 3, wherein the gear ratio between the drive gear (14) and each first driven gear (16) is 4.

5. The brush head (10) according to any one of claims 1 to 4 wherein the gear train (12) includes a plurality of secondary driven gears (32) meshed with one or more primary driven gears (16).

6. The brush head (10) according to any preceding claim, wherein the first set of bristle tufts (24) are shorter than the second set of bristle tufts (28) and wherein the first set of bristle tufts (24) includes bristle tufts having a flat tip and each second set of bristle tuft (28) includes bristle tufts having a tapered tip.

7. A brush head (10) for an electric toothbrush, the brush head (10) including:
a housing (11);
a plurality of bristle tufts (24, 28, 124) extending through apertures (26) in the housing (11);
an epicyclic gear set (112) within the housing (11), the gear set including a ring gear (118), and plurality of planet gears (116) supported on a planet carrier (120), each planet gear (116) meshed with the ring gear (118);
drive means configured to provide motion to the epicyclic gear set (112);
a first drive output including a first oscillating motion about a first axis; and
a second drive output including an orbiting motion about the first axis and a second oscillating motion,
wherein the plurality of bristle tufts (24, 28, 124) includes a first set of bristle tufts (24) attached to the planet carrier (120) and a second set of bristle tufts (28) attached to each planet gear (116).

8. The brush head (10) according to claim 7, wherein the drive means includes a drive shaft (18) having a first end connected to a motor and a second end (22) connected to the planet carrier (120) so that in use the planet carrier (120) is driven by the drive shaft (18).

9. The brush head (10) according to claim 7, further including a sun gear (114), and wherein each planet gear (116) is meshed between the sun gear (114) and the ring gear (118).

10. The brush head (10) according to claim 9, wherein the ring gear (118) is fixed and the sun gear (114) and the planet carrier (120) oscillate about the first axis causing the planet gears (116) to orbit about the first axis and oscillate about their own respective axes.

11. The brush head (10) according to claim 9 or 10, wherein the gear ratio between the ring gear (118) and the planet gear (116) is 5, and the gear ratio between the sun gear (114) and the planet gears (116) is 3.

12. The brush head (10) according to any one of claims 9 to 11, wherein the plurality of bristle tufts (24, 28, 124) includes a first set of bristle tufts (24) attached to the sun gear (114) and a second set of bristle tufts (28) attached to each planet gear (116).

## Patentansprüche

1. Bürstenkopf (10) für eine elektrische Zahnbürste, wobei der Bürstenkopf (10) Folgendes einschließt:
ein Gehäuse (11),
mehrere Borstenbüschel (24, 28, 124), die sich durch eine oder mehrere Öffnungen (26) in dem Gehäuse (11) erstrecken,
einen Getriebezug (12) innerhalb des Gehäuses (11), wobei der Getriebezug (12) ein Antriebszahnrad (14), das dafür konfiguriert ist, um eine Achse zu oszillieren, und mehrere erste angetriebene Zahnräder (16) einschließt, wobei jedes angetriebene Zahnrad (16) unmittelbar mit dem Antriebszahnrad (14) verzahnt ist,
Antriebsmittel, die dafür konfiguriert sind, dem Getriebezug (12) eine Bewegung zu verleihen,
wobei das Antriebszahnrad (14) eine erste Antriebsleistung bereitstellt, die eine erste oszillierende Bewegung in einer ersten Richtung einschließt, und
wobei die angetriebenen Zahnräder (16) jeweils eine zweite Antriebsleistung bereitstellen, die eine zweite oszillierende Bewegung in einer zweiten Richtung, die zu der ersten Richtung entgegengesetzt ist, einschließt, wobei die mehreren Borstenbüschel (24, 28) einen ersten Satz von Borstenbüscheln (24), der an dem Antriebszahnrad (14) befestigt ist, und einen zweiten Satz von Borstenbüscheln (28), der an den mehreren ersten angetriebenen Zahnrädern (16) befestigt ist, einschließen.

2. Bürstenkopf (10) nach Anspruch 1, wobei die mehreren ersten angetriebenen Zahnräder (16) zwei erste angetriebene Zahnräder (16) umfassen, die um einen ersten Quadranten des Antriebszahnrades (14) angeordnet sind.

3. Bürstenkopf (10) nach Anspruch 2, wobei die mehreren ersten angetriebenen Zahnräder (16) ferner zwei erste angetriebene Zahnräder (16) umfassen, die um einen zweiten Quadranten, gegenüber dem ersten Quadranten, des Antriebszahnrades (14) angeordnet sind.

4. Bürstenkopf (10) nach einem der Ansprüche 1 bis 3, wobei das Übersetzungsverhältnis zwischen dem Antriebszahnrad (14) und jedem ersten angetriebenen Zahnrad (16) 4 beträgt.

5. Bürstenkopf (10) nach einem der Ansprüche 1 bis 4, wobei der Getriebezug (12) mehrere sekundäre angetriebene Zahnräder (32) einschließt, die mit einem oder mehreren primären angetriebenen Zahnrädern (16) verzahnt sind.

6. Bürstenkopf (10) nach einem der vorhergehenden Ansprüche, wobei der erste Satz von Borstenbüscheln (24) kürzer ist als der zweite Satz von Borstenbüscheln (28) und wobei der erste Satz von Borstenbüscheln (24) Borstenbüschel einschließt, die eine flache Spitze haben, und jeder zweite Satz von Borstenbüscheln (28) Borstenbüschel einschließt, die eine verjüngte Spitze haben.

7. Bürstenkopf (10) für eine elektrische Zahnbürste, wobei der Bürstenkopf (10) Folgendes einschließt:
ein Gehäuse (11),
mehrere Borstenbüschel (24, 28, 124), die sich durch Öffnungen (26) in dem Gehäuse (11) erstrecken,
einen Planetengetriebesatz (112) innerhalb des Gehäuses (11), wobei der Getriebesatz ein Hohlrad (118) und mehrere Planetenräder (116), die auf einem Planetenträger (120) getragen werden, einschließt, wobei jedes Planetenrad (116) mit dem Hohlrad (118) verzahnt ist,
Antriebsmittel, die dafür konfiguriert sind, dem Planetengetriebesatz (112) eine Bewegung zu verleihen,
eine erste Antriebsleistung, die eine erste oszillierende Bewegung um eine erste Achse einschließt, und
eine zweite Antriebsleistung, die eine umlaufende Bewegung um die erste Achse und eine zweite oszillierende Bewegung einschließt,
wobei die mehreren Borstenbüschel (24, 28, 124) einen ersten Satz von Borstenbüscheln (24), der an dem Planetenträger (120) befestigt ist, und einen zweiten Satz von Borstenbüscheln (28), der an jedem Planetenrad (116) befestigt ist, einschließen.

8. Bürstenkopf (10) nach Anspruch 7, wobei die Antriebsmittel eine Antriebwelle (18) einschließen, die ein erstes Ende, das mit einem Motor verbunden ist, und ein zweites Ende (22), das mit dem Planetenträger (120) verbunden ist, hat, so dass bei Anwendung der Planetenträger (120) durch die Antriebwelle (18) angetrieben wird.

9. Bürstenkopf (10) nach Anspruch 7, der ferner ein Sonnenrad (114) einschließt und wobei jedes Planetenrad (116) zwischen dem Sonnenrad (114) und dem Hohlrad (118) verzahnt ist.

10. Bürstenkopf (10) nach Anspruch 9, wobei das Hohlrad (118) unbeweglich ist und das Sonnenrad (114) und der Planetenträger (120) um die erste Achse oszillieren, was veranlasst, dass die Planetenräder (116) um die erste Achse umlaufen und um ihre eigenen jeweiligen Achsen oszillieren.

11. Bürstenkopf (10) nach Anspruch 9 oder 10, wobei das Übersetzungsverhältnis zwischen dem Hohlrad (118) und dem Planetenrad (116) 5 beträgt und das Übersetzungsverhältnis zwischen dem Sonnenrad (114) und den Planetenrädern (116) 3 beträgt.

12. Bürstenkopf (10) nach einem der Ansprüche 9 bis 11, wobei die mehreren Borstenbüschel (24, 28, 124) einen ersten Satz von Borstenbüscheln (24), der an dem Sonnenrad (114) befestigt ist, und einen zweiten Satz von Borstenbüscheln (28), der an jedem Planetenrad (116) befestigt ist, einschließen.

## Revendications

1. Tête de brosse (10) pour une brosse à dents électrique, ladite tête de brosse (10) comprenant :
une enveloppe (11) ;
une pluralité de poils (24, 28, 124) s'étendant à travers une ou plusieurs ouverture(s) (26) pratiquée(s) dans l'enveloppe (11) ;
un train d'engrenages (12) au sein de l'enveloppe (11), ledit train d'engrenages (12) comprenant un engrenage d'entraînement (14) configuré pour osciller autour d'un axe, et une pluralité de premiers engrenages entraînés (16), chaque premier engrenage entraîné (16) engrenant directement avec l'engrenage d'entraînement (14) ;
un moyen d'entraînement configuré pour fournir un mouvement au train d'engrenages (12) ;
l'engrenage d'entraînement (14) fournissant une première sortie d'entraînement comprenant un premier mouvement oscillant dans une première direction ; et
les engrenages entraînés (16) fournissant respectivement une deuxième sortie d'entraînement comprenant un deuxième mouvement oscillant dans une deuxième direction qui est opposée à la première direction, dans laquelle la pluralité de poils (24, 28) comprend un premier ensemble de poils (24) fixés sur l'engrenage d'entraînement (14) et un deuxième ensemble de poils (28) fixés sur la pluralité de premiers engrenages entraînés (16).

2. Tête de brosse (10) selon la revendication 1, dans laquelle la pluralité de premiers engrenages entraînés (16) comprend deux premiers engrenages entraînés (16) fournis autour d'un premier quadrant de l'engrenage d'entraînement (14).

3. Tête de brosse (10) selon la revendication 2, dans laquelle la pluralité de premiers engrenages entraînés (16) comprend en outre deux premiers engrenages entraînés (16) fournis autour d'un deuxième quadrant faisant face au premier quadrant de l'engrenage d'entraînement (14).

4. Tête de brosse (10) selon l'une quelconque des revendications 1 à 3, dans laquelle le rapport d'engrenage entre l'engrenage d'entraînement (14) et chaque premier engrenage entraîné (16) est de 4.

5. Tête de brosse (10) selon l'une quelconque des revendications 1 à 4, dans laquelle le train d'engrenages (12) comprend une pluralité d'engrenages entraînés secondaires (32) engrenés avec un ou plusieurs engrenage(s) entraîné(s) primaire(s) (16).

6. Tête de brosse (10) selon l'une quelconque des revendications précédentes, dans laquelle le premier ensemble de poils (24) présente des poils plus courts que le deuxième ensemble de poils (28) et dans laquelle le premier ensemble de poils (24) comprend des poils présentant un bout plat et chaque deuxième ensemble de poils (28) comprend des poils présentant un bout effilé.

7. Tête de brosse (10) pour une brosse à dents électrique, la tête de brosse (10) comprenant :
une enveloppe (11) ;
une pluralité de poils (24, 28, 124) s'étendant à travers des ouvertures (26) pratiquées dans l'enveloppe (11) ;
un train épicycloïdal (112) au sein de l'enveloppe (11), ledit train épicycloïdal comprenant une couronne planétaire (118), et une pluralité d'engrenages planétaires (116) supportés sur un porte-satellites (120), chaque engrenage planétaire (116) engrenant avec la couronne planétaire (118) ;
un moyen d'entraînement configuré pour fournir un mouvement au train épicycloïdal (112) ;
une première sortie d'entraînement comprenant un premier mouvement oscillant autour d'un premier axe ; et
une deuxième sortie d'entraînement comprenant un mouvement orbital autour du premier axe et un deuxième mouvement oscillant,
dans laquelle la pluralité de poils (24, 28, 124) comprend un premier ensemble de poils (24) fixés sur le porte-satellites (120) et un deuxième ensemble de poils (28) fixés sur chaque engrenage planétaire (116).

8. Tête de brosse (10) selon la revendication 7, dans laquelle le moyen d'entraînement comprend un arbre d'entraînement (18) présentant une première extrémité raccordée à un moteur et une deuxième extrémité (22) raccordée au porte-satellites (120) de sorte que, en cours d'utilisation, le porte-satellites (120) est entraîné par l'arbre d'entraînement (18).

9. Tête de brosse (10) selon la revendication 7, comprenant en outre un planétaire intérieur (114), et dans laquelle chaque engrenage planétaire (116) engrène entre le planétaire intérieur (114) et la couronne planétaire (118).

10. Tête de brosse (10) selon la revendication 9, dans laquelle la couronne planétaire (118) est fixe et le planétaire intérieur (114) et le porte-satellites (120) oscillent autour du premier axe, ce qui amène les engrenages planétaires (116) à orbiter autour du premier axe et à osciller autour de leurs propres axes respectifs.

11. Tête de brosse (10) selon la revendication 9 ou 10, dans laquelle le rapport d'engrenage entre la couronne planétaire (118) et l'engrenage planétaire (116) est de 5, et le rapport d'engrenage entre le planétaire intérieur (114) et les engrenages planétaires (116) est de 3.

12. Tête de brosse (10) selon l'une quelconque des revendications 9 à 11, dans laquelle la pluralité de poils (24, 28, 124) comprend un premier ensemble de poils (24) fixés sur le planétaire intérieur (114) et un deuxième ensemble de poils (28) fixés sur chaque engrenage planétaire (116).
